# EUROPEAN PATENT APPLICATION

(11) **EP 2 471 675 A2**
(43) Date of publication of application: **04.07.2012**
(21) Application number: 10812239.1
(22) Date of filing: 24.08.2010
(51) Int. Cl.: B60G 17/044, B60G 17/056, B60G 17/04

(54) **VEHICLE BODY HEIGHT MULTI-CONTROL APPARATUS FOR AN AIR SUSPENSION SYSTEM**

(30) Priority: 25.08.2009 KR 20090078942
(71) Applicant: Kim, Seok Hwan, Seoul 137-947 (KR)
(72) Inventor: Kim, Seok Hwan, Seoul 137-947 (KR)
(74) Representative: Schumacher & Willsau
(86) International application number: PCT/KR2010/005643
(87) International publication number: WO 2011/025225

(57) **Abstract**

The present invention pertains to the multiple ride height control apparatus for the air suspension system which fills and exhausts the compressed air to and from the air spring that is installed between the frame/body and the suspension arm to adjust the ride height, the apparatus comprises the mechanical leveling valve which rotates clockwise and counterclockwise, or moves to the upward/downward or leftward/rightward directions so as to control the filling and exhausting the compressed air, the valve driver which rotates or moves the mechanical leveling valve to the direction of the filling and exhausting the compressed air and the controller which controls operation of the valve driver.

With this, the multiple ride height control apparatus for the air suspension system is provided in order that the users are able to adjust the ride height as desired and intended when necessary, and that the price for the apparatus is inexpensive with the simple structure.

## Description

### Technical Field

The present invention relates to a multiple ride height control apparatus for an air suspension system, more specifically, a low-priced, simply-structured apparatus enabling the users to adjust the ride height as needed and desired.

### Background Art

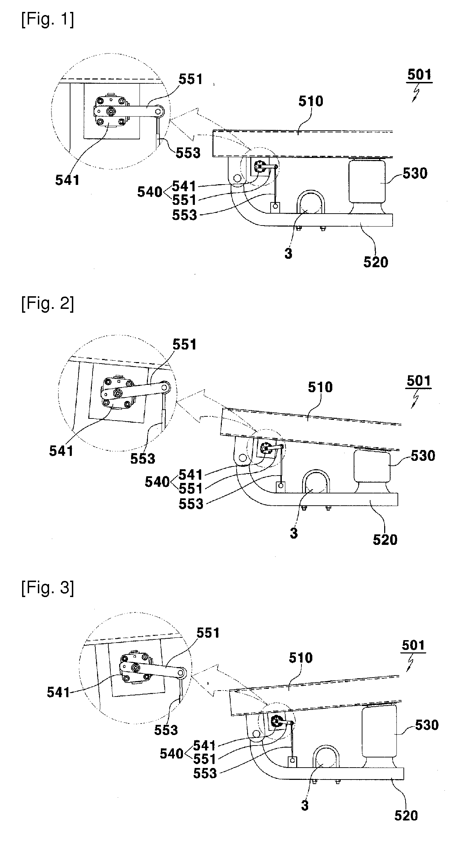

A typical example as to the air suspension system generally applicable to vehicles is illustrated in FIG. 1 through FIG. 3.

As illustrated in FIG. 1 to FIG. 3, the conventional air suspension system (501) comprises an air spring (530) which is installed between the frame/body(510) and the suspension arm (520) that fixes the axle (3) and a mechanical leveling valve (540) and a linkage (553) that maintain the ride height by either filling the air spring (530) with the compressed air supplied from the air tank, not illustrated herein, or exhausting the compressed air from the air spring (530) according to variation of the weight which presses the frame/body(510).

In the conventional air suspension system (501), the mechanical leveling valve (540) comprises a valve body (541) which fills the air spring (530) with the compressed air that is supplied from the air tank and exhausts the compressed air from the air spring (530) and a rotating handle (551) that opens and closes the valve body (541) by the rotation.

The conventional air suspension system (501), as illustrated in FIG. 1 to FIG. 3, operates in three modes according to the variation of weight added to the frame/body (510) i.e. the neutral mode, the fill mode and the exhaust mode.

First, the neutral mode maintains, as shown in FIG. 1, the designed ride height and at this moment the mechanical leveling valve (540), the valve body (541) and the rotating handle (551) are kept in parallel so that both filling and exhausting the compressed air to and from the air spring (530) is controlled to close with the mechanical leveling valve (540).

Next, in the fill mode, the air spring (530) is filled with the compressed air, as shown in FIG. 1, until the neutral mode by getting the mechanical leveling valve (540) operated as the air spring (530) is compressed due to the added weight when cargoes are loaded or a driver and passengers get in the vehicle so the height of the frame/body (510) gets lowered.
In case, as shown in FIG. 2, cargoes are loaded or a driver and passengers get in the vehicle so the height of the frame/body (510) gets lowered and the air spring (530) is compressed due to the added weight, the air spring (530) is filled with the compressed air, as shown in FIG. 1, until the neutral mode by controlling the valve body(541) of the mechanical leveling valve (540).

In other words, if the height of the frame/body (510) gets lowered, the linkage (553) lifts up the rotating handle (551) so the valve body (541) opens to the direction of filling the compressed air, which allows the air spring (530) to be filled with the compressed air so that the air spring (530) expands and the ride height rises.

And, if the ride height gets raised up to the original height, the linkage (553) pulls down the rotating handle (551) again to be in parallel with the valve body (541) so that air flow for filling and/or exhausting the compressed air can be controlled to stop by the mechanical leveling valve (540) in the neutral mode, as in FIG. 1.

Thus, the predetermined ride height is maintained with the conventional air suspension system (501), as in FIG. 1 even though cargoes are loaded or a driver and passengers get in the vehicle.

On the other hand, in the exhaust mode, the compressed air is exhausted from the air spring (530), as shown in FIG. 1, until the neutral mode by getting the mechanical leveling valve (540) operated as the air spring (530) expands due to the decreased weight when cargoes are unloaded or a driver and passengers get off the vehicle so the height of the frame/body (510) gets raised.

In other words, if the height of the frame/body (510) gets raised, the linkage (553) pulls down the rotating handle (551) so the valve body (541) opens to the direction of exhausting the compressed air, which allows the compressed air to be exhausted from the air spring (530) so that the air spring (530) contracts and the ride height gets lowered.

And, if the ride height gets lowered to the original height, the linkage (553) lifts up the rotating handle (551) again to be in parallel with the valve body (541) so that both filling and exhausting the compressed air remain shut down, as in FIG. 1.

In such conventional air suspension system (501), the predetermined ride height is maintained as in FIG. 1 even though cargoes are loaded or a driver and passengers get in the vehicle.

However, the conventional air suspension system (501) maintains the same ride height at all times regardless of cargoes being loaded and unloaded or passengers and a driver getting in and off the vehicle so the ride height gets lowered or raised. Thus, it is disadvantageous that the users are not able to adjust the ride height as desired.

Due to this problem, the users cannot raise the ride height as desired in rough road driving or on slopes so the users can't effectively cope with potential damages of the underbody of the vehicle and nor secure the driving stability more safely because the frame/body (510) can not be lowered as wished on high speed driving.

In the meantime, as an alternative of the conventional air suspension system (501), the electronically controlled air suspension system (ECAS), which includes electronic distance sensors to detect the ride height, an ECAS solenoid valve to control the filling and exhausting the compressed air to and from the air spring and the electronic control unit (ECU) to control these parts, was developed and is currently applied to some passenger cars and commercial vehicles.

However, since the ECAS system needs such cost-demanding electronic parts as electronic distance sensors, an ECU, and an ECAS solenoid valve, there is a problem that the price of the system increases and high maintenance expense is inevitable.

### Disclosure of Invention

### Technical Problem

Accordingly, the present invention has been made to solve the above-mentioned problems occurring in the prior art while advantages achieved by the prior art are maintained intact.

It is thus an object of the present invention to provide the users with a means of having a simple structure, in a cost-saving manner, and the users can manually or automatically control the ride height as necessary.

It is another object of the present invention is to provide an improved air suspension system to allow the boarding height of buses to get lowered for easy boarding and improves driving stability with lowering the ride height in high speed driving and raises the frame/body in rough road driving or slopes.
Further object of the present invention is to provide an improved air suspension system to adjust the ride height when cargoes are loaded and unloaded and passengers get in or get off the vehicle for the convenience.

### Technical Solution

In one aspect of the present invention, there is provided a multiple ride height control apparatus for an air suspension system having an air spring to be installed between a frame/body and a suspension arm in order to adjust the ride height, by filling and exhausting a compressed air, the apparatus comprising a mechanical leveling valve for controlling a filling and exhausting the compressed air by adjusting its mounting angle, being rotated clockwise and counterclockwise, a valve driver for rotating the mechanical leveling valve to the direction of filling and exhausting the compressed air and a controller for controlling the operation of the valve driver.

The controller controls the operation of the valve driver, with an aim that enables the users to manually or automatically adjust the ride height as intended by changing the mounting angles of the mechanical leveling valve that is simply structured.

In this respect, the technically solved multiple ride height control apparatus for the air suspension system with low system price is provided to make it possible that the boarding height of buses is lowered and the driving stability is improved by driving with the lowered height of the frame/body in high speed driving and the height of the frame/body is adjusted in loading or unloading cargoes or getting into and out of the vehicles of passengers by adjusting the mechanical leveling valve for the convenience.

### Advantageous Effect

According to the present invention, the multiple ride height control apparatus for the air suspension, which is simple structured, is provided at low system price which enables the users to adjust the ride height by using the mounting angle or the mounting location of the mechanical leveling valve as needed and enables the mechanical leveling valve to possess the same functionality as the electronic leveling valve.

### Brief Description of the Drawings

A detailed description of the preferred embodiments of the present invention is provided hereinbelow, by way of example only, with reference to the accompanying drawings, in which:
FIG. 1 through FIG. 3 are the side elevation views showing the operation of the conventional air suspension system.
FIG.4 through FIG.6 are the side elevation views showing the multiple ride height control apparatus for the air suspension system and the operation thereof according to the first embodiment of the present invention.
FIG.7 through FIG. 10 are the drawings showing a few examples with respect to a valve driver according to the first embodiment of the present invention.
FIG. 11 through FIG. 13 are the side elevation views showing the multiple ride height control apparatus for the air suspension system and the operation thereof according to the second embodiment of the present invention.
FIG. 14 through FIG. 16 are the drawings showing a few examples with respect to the valve driver according to the second embodiment of the present invention.
FIG. 17 through FIG. 19 are the side elevation views showing the multiple ride height control apparatus for the air suspension system and the operation thereof according to the third embodiment of the present invention.
FIG.20 through FIG.22 are the drawings showing a few examples with respect to the valve driver according to the third embodiment of the present invention.

### <Description on Signs Expressed as per Important Parts in the Drawings>

| | |
|---|---|
| 10: Frame/body, | 20: Suspension arm |
| 30: Air spring, | 40: Mechanical leveling valve |
| 41: Valve body, | 50: Valve control means |
| 51: Rotating handle, | 53: Linkage |
| 61, 81, 91: Valve drivers, | 71: Controller |
| 100, 200, 300: Forward/reverse motor, | 102: Mounting bracket |

### Best Mode for Carrying Out the Invention

Hereunder is the detailed description of the embodiments according to the present invention;

As to an embodiment of the present invention, it is to provide a multiple ride height control apparatus for an air suspension system having an air spring to be installed between a frame/body and a suspension arm in order to adjust the ride height, by filling and exhausting a compressed air, the apparatus comprising a mechanical leveling valve for controlling a filling and exhausting the compressed air by adjusting its mounting angle, being rotated clockwise and counterclockwise, a valve driver for rotating the mechanical leveling valve to the direction of filling and exhausting the compressed air and a controller for controlling the operation of the valve driver.

Herein, the mechanical leveling valve is preferred to include the valve body to control the filling and exhausting the compressed air by clockwise and counterclockwise rotation of the rotating handle, the mounting bracket to be installed in order to be rotated clockwise and counterclockwise by the valve driver and fix the valve body, and the rotating handle, one end of which is connected to the rotating center shaft of the valve body and the other end of which is connected to the top of the linkage that is connected to the suspension arm for the relative rotation.

And, it is effective for the valve driver to have a forward/reverse motor which rotates the mounting bracket to rotate clockwise and counterclockwise.

It is preferable that the valve driver includes a driven gear combined with the mounting bracket, a rack which makes the driven gear to rotate clockwise and counterclockwise through reciprocal movement and a bidirectional cylinder which makes the rack to move reciprocally.

In one embodiment of the present invention, the mounting bracket is installed in a way that it can rotate to its original position elastically, and it is more effective for the valve driver to have a pair of unidirectional cylinders or actuators which pressurize the mounting bracket from its both sides to the forward direction and the reverse direction.

The controller includes the optional selection part composed of the normal mode and the user selection mode of having ascending mode and descending mode to select the raising or lowering of the ride height. The valve driver is preferable to rotate the mounting bracket to the direction of the filling and exhausting the compressed air according to the mode selected in the controller.

Meanwhile, in another embodiment of the present invention, as to the multiple ride height control apparatus for the air suspension system which fills and exhausts the compressed air to and from the air spring that is installed between the frame/body and the suspension arm to adjust the ride height, the multiple ride height control apparatus comprises the mechanical leveling valve which is moved leftward and rightward so as to control the filling and exhausting the compressed air, the valve driver which moves the mechanical leveling valve leftward and rightward to the direction of the filling and exhausting the compressed air, and the controller controls the operation of the valve driver.

Herein, the mechanical leveling valve is desirable to include the valve body to control the filling and exhausting the compressed air by clockwise and counterclockwise rotation of the rotating handle, the mounting bracket to be installed in order to be moved to leftward and rightward by the valve driver and fix the valve body; and the rotating handle, one end of which is connected to the rotating shaft of the valve body and the other end of which is connected to the top of a linkage that is connected to the suspension arm for the relative rotation.

And, it is effective for the valve driver to include the rack which is combined with the mounting bracket to the horizontal direction, a pinion which rotates clockwise and counterclockwise, being engaged with the rack; and the forward/reverse motor which rotates the pinion clockwise and counterclockwise.

In another embodiment of the present invention, the valve driver is desirable to have the bidirectional cylinder which moves the mounting bracket to the left / right directions bidirectionally. The mounting bracket is installed to be rotated to its original position elastically, and it is more effective for the valve driver to have a pair of unidirectional cylinders or actuators which pressurize the mounting bracket from its both sides to the left / right directions.

In this regard, the controller has the optional selection part composed of the normal mode and the user selection mode of having ascending mode and descending mode to select the raising or lowering of the ride height. The valve driver is desirable to move the mounting bracket leftward and rightward to the direction of the filling and exhausting the compressed air according to the mode selected in the controller.

Meanwhile, as to the multiple ride height control apparatus for the air suspension system which fills and exhausts the compressed air to and from the air spring that is installed between the frame/body and the suspension arm to adjust the ride height, the aforesaid objective is accomplished by another embodiment of the present invention, the multiple ride height control apparatus for the air suspension system, comprising the mechanical leveling valve which is moved upward and downward so as to control the filling and exhausting the compressed air, the valve driver which moves the mechanical leveling valve upward and downward to the direction of the filling and exhausting the compressed air, and the controller which controls the operation of the valve driver.

Herein, the mechanical leveling valve is desirable to include the valve body to control the filling and exhausting the compressed air by clockwise and counterclockwise rotation of the rotating handle, the mounting bracket which fixes the valve body and moves upward and downward by the valve driver, and the rotating handle, one end of which is connected to the rotating shaft of the valve body and the other end of which is connected to the top of a linkage that is connected to the suspension arm for the relative rotation.

And, it is effective for the valve driver to have: the rack which is combined with the mounting bracket to the vertical direction; the pinion which rotates clockwise and counterclockwise, being engaged with the rack; and the forward/reverse motor which rotates the pinion clockwise and counterclockwise.

In this embodiment, the valve driver is desirable to have the bidirectional cylinder which moves the mounting bracket to the upward and downward directions. The mounting bracket is installed to be returned to its original position elastically, and it is more effective for the valve driver to have a pair of unidirectional cylinders or actuators which pressurize the mounting bracket from its both sides to the upward and downward directions.

In this regard, the controller has the optional selection part composed of the normal mode and the user selection mode of having ascending mode and descending mode to select the raising or lowering of the ride height. The valve driver is desirable to move the mounting bracket upward and downward to the direction of the filling and exhausting the compressed air according to the mode selected in the controller.

### Embodiments for Carrying Out the Invention

Provided hereunder is the description in detail as to the embodiments of the present invention with reference to the drawings attached herewith.

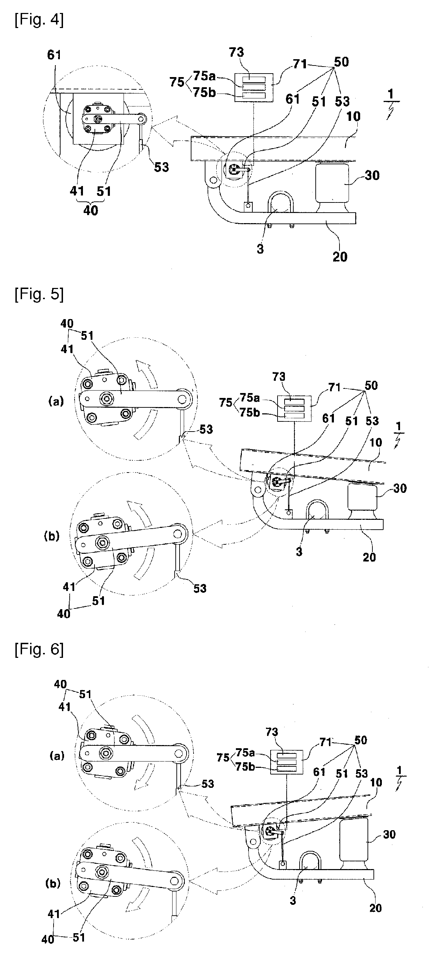

FIG.4 through FIG.6 are the side elevation views showing the multiple ride height control apparatus (1) for the air suspension system and operation thereof according to the first embodiment of the present invention.

Provided herein according to the present embodiment is, as illustrated in these drawings, the multiple ride height control apparatus for an the suspension system (1) includes the suspension arm (20) which is installed to fix the frame/body (10) and the axle (3) so as to be accessible and separable to and from the frame/body (10), the air spring (30) which is installed between the frame/body (10) and the suspension arm (20) to maintain the ride height, the mechanical leveling valve (40) which adjusts the ride height by filling the compressed air that is transmitted from the air tank, not illustrated herein, to the air spring (30) according to the variation of the weight added to the frame/body (10), or exhausting the compressed air from the air spring (30); and the valve operating means (50) which adjusts the mounting angle of the mechanical leveling valve (40) clockwise and counterclockwise.

In this regard, given the fact that all the mechanical or functional components except the valve control means (50) are nearly identical to those of the conventional suspension system (501), we will hereinafter describe the valve operating means (50) only.

The valve operating means (50) is installed to the frame/body (10) and includes the valve driver (61) to rotate the mechanical leveling valve (40) clockwise or counterclockwise and the controller (71) to control the operation of the valve driver (61).

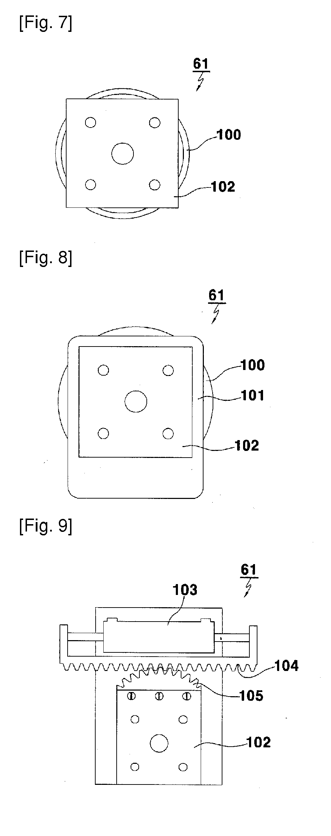

Among these, the valve driver (61) adjusts the mounting angle of the mechanical leveling valve (40) clockwise and counterclockwise as illustrated in FIG.7 by using the forward/reverse motor (100), and more specifically, it rotates the mounting bracket (102) which fixes the valve body (41) of the mechanical leveling valve (40) to the clockwise or counterclockwise direction by using the forward/reverse motor (100).

At this point, the forward/reverse motor (100) can be any of the various types of forward/reverse motors such as stepping motors, servo motors, ordinary electrical motors or air motors, and in addition, the reduction gear-integrated forward/reverse motor in which the forward/reverse motor (100) combined with the reduction gear (101) also can be used, as illustrated in FIG.8.

Moreover, the valve driver (61) can adjust the mounting angle of the mechanical leveling valve (40) structured, as illustrated in FIG.9, to the clockwise or counterclockwise direction by using the bidirectional cylinder (103).

Herein, the valve driver (61) includes the bidirectional air cylinder (103), the rack (104) combined therewith; and the driven gear (105) which is installed in the mounting bracket (102) fixing the valve body (41) of the mechanical leveling valve (40) and engages with the rack (104) and rotates.

This valve driver (61) rotates the mounting angle of the mechanical leveling valve (40) to the clockwise or counterclockwise direction by converting reciprocating motion of the rack (104) to the rotating motion of the driven gear (105) driven by the operation of the bidirectional air cylinder (103).

Herein, the bidirectional air cylinder (103) can be provided in various types of the bidirectional air cylinder, such as the bidirectional pneumatic cylinder.

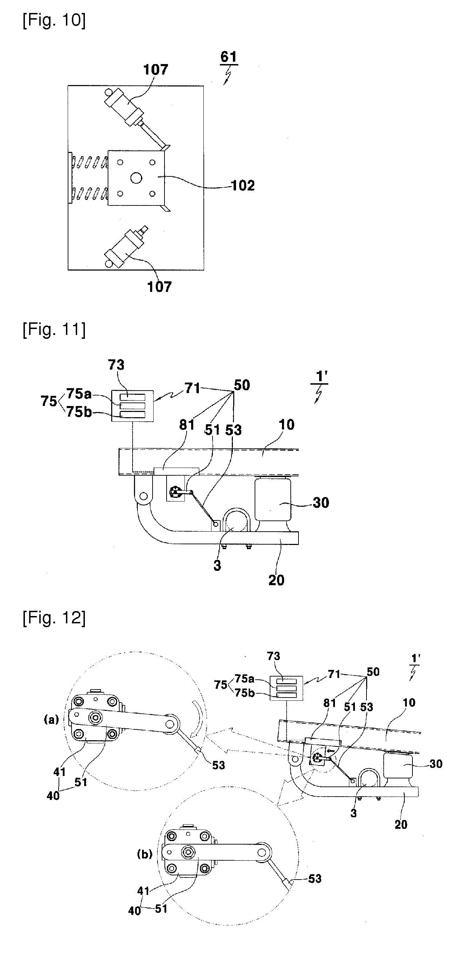

Moreover, the valve driver (61) can rotate, as illustrated in FIG. 10, the mounting angle of the mechanical leveling valve (40) clockwise or counterclockwise by using the unidirectional air cylinder or the electrical actuator (107).

At this point, the mounting bracket is installed so as to be returned its original position in an elastic manner, the valve driver (61) is desirable to rotate the mounting bracket (102) to the clockwise or counterclockwise direction by installing two unidirectional air cylinders or two electrical actuators (107) so as to pressurize both sides of the mounting bracket (102) of the mechanical leveling valve (40).

Meanwhile, the multiple ride height control apparatus according to the present embodiment provides a function to adjust the ride height in two distinct modes: the normal mode which maintains the designed ride height in normal driving by the mechanical leveling valve which operates in three modes, i.e. the neutral mode, the fill mode and the exhaust mode according to the variation of the weight added to the frame/body (10) and the user's mode which controls the ride height by adjusting the mounting angle of the mechanical leveling valve (40) as wished.

In order to achieve this, the controller (71) is provided to accommodate the normal mode selection part (73) and the user mode selection part (75). The user mode selection part is divided to the ascending semi-mode (75a) and the descending semi-mode (75b) to select the raising and lowering of the ride height. These selection parts can be provided by various maneuvering means such as buttoning type or dialing type.

Hereunder is the description about the process of adjusting the ride height via this unique multiple ride height control apparatus (1), according to the present embodiment. In this regard, the normal mode is not described herein as its operating process is almost the same as that of the aforesaid conventional suspension system (501), so only the user mode will be described in connection with the multiple ride height control apparatus (1).

In an attempt to improve the driving stability in high speed driving and offer the convenience when loading or unloading cargoes, or getting into and out of the vehicles of passengers, the height of the frame/body (10) can be lowered as shown in FIG.5. This can be achieved when the users choose the descending mode (75b) in the user-mode selection device (75) of the controller **(71).**

As such, if the users select the descending mode (75b) in the user-mode selection device (75) so that the valve driver (61) rotates the valve body (41) to a counterclockwise direction as shown in the enlarged FIG.ure, (a) of FIG.5, the valve body (41) opens to the direction of exhausting the compressed air so that air is exhausted from the air spring (30) and the air spring (30) is contracted. With this process, the height of the frame/body (10) gets lowered.

And, once the air spring (30) is contracted so the height of the frame/body(10) gets lowered, the linkage (53) pushes up the connected rotating handle (51) so that it makes the rotating handle to be in parallel with the valve body (41), as shown in the enlarged FIG.ure, (b) of FIG.5 and makes the neutral mode that shuts both the filling and exhausting the compressed air and eventually makes the height of the frame/body (10) that the users want.

Through the above-cited mechanism, the ride stability is improved in high speed driving with the lowered height of the frame/body (10) and the convenience increases when loading or unloading cargoes, or getting into and out of the vehicles of passengers.

Contrarily, the height of the frame/body (10) can be raised, as shown in FIG.6, when driving in rough or slopped roads for the protection of the underbody, which is activated when the users select the ascending mode (75a) in the user-mode selection part (75) of the controller (71).

If the users select the ascending mode (75b) in the user-mode selection part (75) so that the valve driver (61) rotates the valve body (41) to the clockwise direction as shown in the enlarged FIG.ure, (a) of FIG.6, the valve body (41) opens to the direction of filling the compressed air so that the air spring (30) is filled with the compressed air and the air spring (30) expands. With this process, the height of the frame/body (10) gets raised.

And, once the air spring (30) expands so the height of the frame/body(10) gets raised, the linkage (53) pulls down the connected rotating handle (51) so that it makes the rotating handle to be in parallel with the valve body (41), as shown in the enlarged FIG.ure, (b) of FIG.6 and makes the neutral mode that shuts both the filling and exhausting the compressed air and eventually makes the height of the frame/body (10) that the users wants.

Through the above-cited mechanism, if the vehicle is driving in rough and slopped roads, the vehicle can be driven stably because of the condition that the underbody is properly spaced from the ground of the rough roads so that the underbody can be protected.

Meanwhile, FIG. 11 through FIG. 13 are the side elevation views showing the multiple ride height control apparatus (1') and operation thereof according to the second embodiment of the present invention.

Provided herein according to the present embodiment is, as illustrated in these drawings, the multiple ride height control apparatus (1') includes the suspension arm (20) which is installed to fix the frame/body (10) and the axle (3) so as to be accessible and separable to and from the frame/body (10); the air spring (30) which is installed between the frame/body (10) and the suspension arm (20) to maintain the height of the frame/body (10), the mechanical leveling valve (40) which adjusts the height of the frame/body (10) by filling the compressed air that is transmitted from the air tank, not illustrated herein, to the air spring (30) according to the variation of the weight added to the frame/ body (10), or exhausting the compressed air from the air spring (30), and the valve operating means (50) which moves the mounting location of the mechanical leveling valve (40) leftward and rightward.

In this regard, given the fact that all the remaining compositions except the valve driver (81) of the valve operating means (50) are nearly identical to those in the abovementioned first embodiment, we will hereinafter describe the valve driver (81) only.

According to the present embodiment, the valve driver (81) of the multiple ride height control apparatus (1) is installed to the frame/body (10) to move the mechanical leveling valve (40) to the left and right directions.

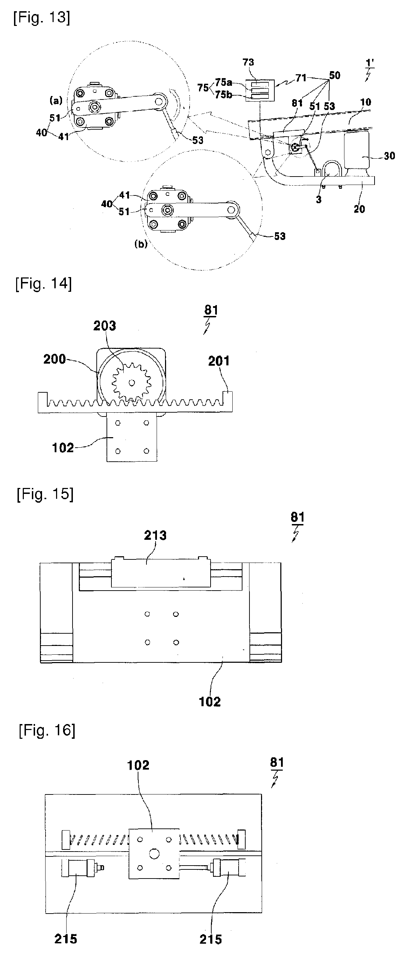

This valve driver (81) moves the mounting location of the mechanical leveling valve (40) leftward and rightward., as illustrated in FIG. 14, by using the rack (201), the pinion (203) and the forward/reverse motor (200).

At this point, the rack (201) is horizontally combined with the mounting bracket (102) that fixes the valve body (41) of the mechanical leveling valve (40), and the pinion (203) which is engaged with the rack (201) and the forward/reverse motor (200) which rotates the pinion (203) clockwise and counterclockwise are installed nearby the rack (201).

Herein, the forward/reverse motor (200) can be any of the various types of forward/reverse motors such as stepping motors, servo motors, ordinary electrical motors or air motors, or the reduction gear-integrated forward/reverse motor in which the forward/reverse motor (200) combined with the reduction gear can be provided so that the reduction gear of the forward/reverse motor rotates the pinion (203) to move the mechanical leveling valve (40) combined with the rack (201) leftward or rightward.

In addition, the valve driver (81) can be provided to have the bidirectional air cylinder (213), as illustrated in FIG. 15, to move the mounting bracket (102) that fixes the valve body (41) of the leveling valve (40) leftward and rightward.

Or, the mounting bracket (102) that s the valve body (41) is installed, as illustrated in FIG. 16, so as to be returned to its original position leftward and rightward in an elastic manner and the valve driver (81) is provided with a pair of unidirectional air cylinders or electrical actuators (215) to move the mounting bracket (102) of the mechanical leveling valve by pressurizing it to the leftward and rightward directions. Presented hereunder is the description on the operating of the multiple ride height control apparatus (1) which has such construction according to the present embodiment.

To begin with, for the purpose of improving the driving stability in case of driving at high speed and offering the convenience when loading or unloading cargoes, or getting into and out of the vehicles of passengers, the height of the frame/body(1 0) can be lowered as shown in FIG. 12. This can be achieved when the users choose the descending mode (75b) in the user-mode selection part (75) of the controller (71).

As such, if the users selects the descending mode (75b) in the user-mode selection part (75) so that the valve driver (81) moves the valve body (41) to the left direction, as shown in the enlarged FIG.ure, (a) of FIG. 12, the rotating handle (51) rotates to the direction of exhausting the compressed air so that the valve body (41) opens to the direction of exhausting the compressed air.

If so, air is exhausted from the air spring (30) through the valve body (41) so that the air spring (30) is contracted and the ride height gets lowered.

And, once the air spring (30) is contracted so that the height of the frame/body(10) gets lowered, the linkage (53) pushes up the connected rotating handle (51) so that it makes the rotating handle to be in parallel with the valve body (41), as shown in the enlarged FIG.ure, (b) of FIG. 12 and makes the neutral mode that shuts both the filling and exhausting the compressed air and eventually makes the ride height that the users want.

Through the above-cited mechanism, the ride stability is improved in high speed driving with the lowered height of the frame/body (10) and the convenience increases when loading or unloading cargoes, or getting into and out of the vehicles of passengers.

Contrarily, the height of the frame/body(10) can be raised, as shown in FIG. 13, when driving in rough and sloped roads for the protection of the underbody of the vehicle, which is activated when the users select the ascending mode (75a) in the user-mode selection part (75) of the controller (71).

If the users select the ascending mode (75b) in the user-mode selection part (75) so that the valve driver (81) moves the mounting bracket to the right direction as shown in the enlarged FIG.ure, (a) of FIG. 13, the rotating handle (51) rotates to the direction of filling the compressed air so that the valve body (41) opens to the direction of filling the compressed air transmitted from the air tank and the air spring (30) is filled with the compressed air through the valve body (41) and in this process, the air spring (30) is expanded and the run height gets raised.

And, once the air spring (30) is expanded so that the height of the frame/body (10) gets raised, the linkage (53) pulls down the connected rotating handle (51) so that it makes the rotating handle to be in parallel with the valve body (41), as shown in the enlarged FIG.ure, (b) of FIG. 13 and makes the neutral mode that shuts both the filling and exhausting the compressed air and eventually makes the ride height that the users want.

Through the above-cited mechanism, if the vehicle is driving in rough and slopped roads, the vehicle can be driven stably because of the condition that the underbody is properly spaced from the ground of the rough roads so that the underbody can be protected.

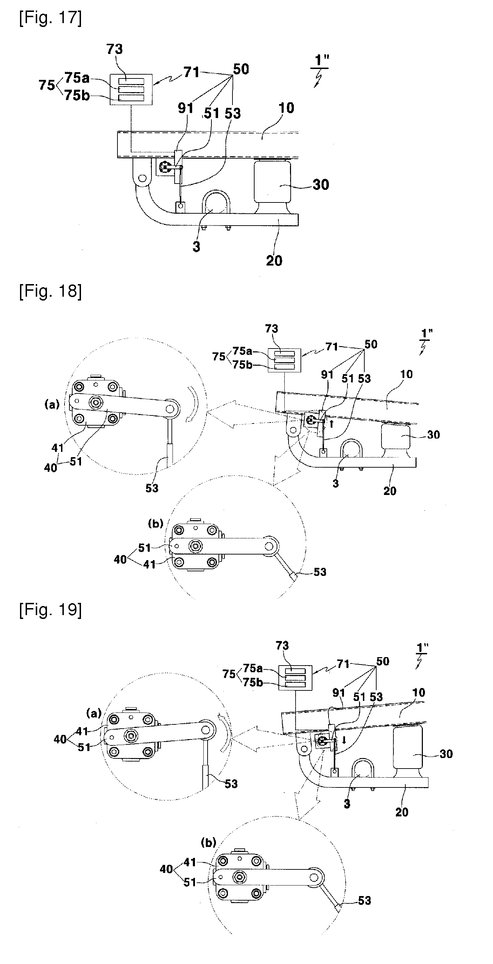

Meanwhile, FIG. 17 through FIG. 19 are the side elevation views showing the multiple ride height control apparatus (1") and operation thereof according to the second embodiment of the present invention.

Provided herein according to the present embodiment is, as illustrated in these drawings, the multiple ride height control apparatus for an the suspension system (1) includes the suspension arm (20) which is installed to fix the frame/body (10) and the axle (3) so as to be accessible and separable to and from the frame/body (10), the air spring (30) which is installed between the frame/body (10) and the suspension arm (20) to maintain the height of the frame/body (10); the mechanical leveling valve (40) which adjusts the height of the frame/body (10) by filling the compressed air that is transmitted from the air tank, not illustrated herein, to the air spring (30) according to the variation of the weight added to the frame/body (10), or exhausting the compressed air from the air spring (30), and the valve operating means (50) which moves the mounting location of the mechanical leveling valve (40) upward and downward.

In this regard, given the fact that all the remaining compositions except the valve driver (91) of the valve control means (50) are nearly identical to those in the abovementioned second embodiment, we will hereinafter describe the valve driver (91) only.

According to the present embodiment, the valve driver (91) of the multiple ride height control apparatus (1) is installed to the frame/body (10) to move the mechanical leveling valve (40) to upward and downward directions.

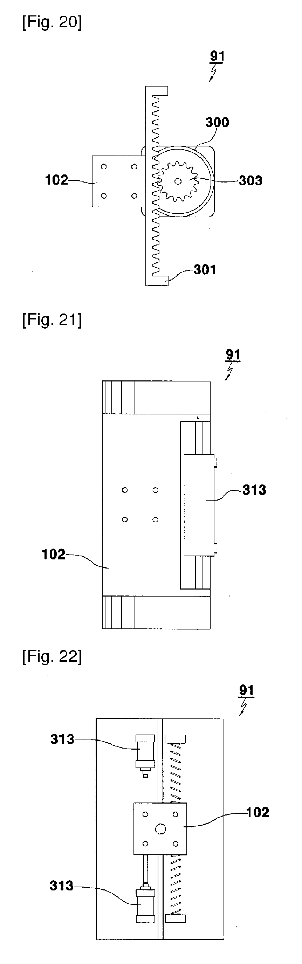

This valve driver (91) moves the mounting location of the mechanical leveling valve (40) upward and downward, as illustrated in FIG.20, by using the rack (301), the pinion (303) and the forward/reverse motor (300).

At this point, the rack (301) is vertically combined with the mounting bracket (102) that fixes the valve body (41) of the mechanical leveling valve (40), and the pinion (303) which is engaged with the rack (301) and the forward/reverse motor (300) which rotates the pinion (303) clockwise and counterclockwise are installed nearby the rack (301).

Herein, the forward/reverse motor (300) can be any of the various types of forward/reverse motors such as stepping motors, servo motors, ordinary electrical motors or air motors, or the reduction gear-integrated forward/reverse motor in which the forward/reverse motor (300) combined with the reduction gear can be provided so that the reduction gear of the forward/reverse motor rotates the pinion (303) to move the mechanical leveling valve (40) combined with the rack (301) upward and downward.

In addition, the valve driver (91) can be provided to have the bidirectional air cylinder (313), as illustrated in FIG.21, to move the mounting bracket (102) that fixes the valve body (41) of the mechanical leveling valve (40) upward and downward.

Or, the valve driver (91) is installed, as illustrated in FIG.22, so as for the mounting bracket (102) that fixes the valve body (41) to be returned to its original position upward and downward in an elastic manner and the valve driver (91) is provided with a pair of unidirectional air cylinders or electrical actuators (313) to move the mounting bracket (102) of the mechanical leveling valve (40) by pressurizing it upward and downward.

Presented hereunder is the description on the operating of the multiple ride height control apparatus (1 ") which has such construction according to the present embodiment.

To begin with, for the purpose of improving the driving stability in case of driving at high speed and offering the convenience when loading or unloading cargoes, or getting into and out of the vehicles of passengers, the ride height can be lowered as shown in FIG. 18. This can be achieved when the users choose the descending mode (75b) in the user-mode selection part (75) of the controller (71).

As such, if the users select the descending mode (75b) in the user-mode selection part (75) so that the valve driver (91) moves the valve body (41) upward, as shown in the enlarged FIG.ure, (a) of FIG. 18, the rotating handle (51) rotates to the direction of exhausting the compressed air so that the valve body (41) opens to the direction of exhausting the compressed air.

If so, air is exhausted from the air spring (30) through the valve body (41) so that the air spring (30) is contracted and the ride height gets lowered.

And, once the air spring (30) is contracted so that the height of the frame/body (10) gets lowered, the linkage (53) pushes up the connected rotating handle (51) so that it makes the rotating handle to be in parallel with the valve body (41), as shown in the enlarged FIG.ure, (b) of FIG. 18 and makes the neutral mode that shuts both the filling and exhausting the compressed air and eventually makes the ride height that the users want.

Through the above-described mechanism, the ride stability is improved in high speed driving with the lowered height of the frame/body (10) and the convenience increases when loading or unloading cargoes, or getting into and out of the vehicles of passengers.

Contrarily, the ride height can be raised, as shown in FIG. 19, when driving in rough and sloped roads for the protection of the underbody of the vehicle, which is activated when the users select the ascending mode (75a) in the user-mode selection part (75) of the controller (71).

If the users select the ascending mode (75a) in the user-mode selection part (75) so that the valve driver (91) moves the valve body (41) to the downward direction as shown in the enlarged FIG.ure, (a) of FIG. 19, the rotating handle (51) rotates to the direction of filling the compressed air so that the valve body (41) opens to the direction of filling the compressed air.

Accordingly, the air spring (30) is filled with the compressed air transmitted from the air tank through the valve body (41) and the air spring (30) is expanded. With this process, the run height gets raised.

And, once the air spring (30) is expanded so that the ride height gets raised, the linkage (53) pulls down the connected rotating handle (51) so that it makes the rotating handle to be in parallel with the valve body (41), as shown in the enlarged FIG.ure, (b) of FIG. 19 and makes the neutral mode that shuts both the filling and exhausting the compressed air and eventually makes the ride height that the users want.

Through the above-cited mechanism, if the vehicle is driving in rough and slopped roads, the vehicle can be driven stably because of the condition that the underbody is properly spaced from the ground of the rough roads so that the underbody can be protected.

As FIG.ured out by far, the multiple ride height control apparatus for the air suspension system, according to the present embodiment, can prevent the damage of the underbody in driving on rough and slopped roads and can secure better driving stability in high speed driving by adjusting the mounting angle and the mounting location to get the frame/body (10) raised or lowered as desirably intended.

In addition, this apparatus provides better convenience when loading or unloading cargoes or getting into and out of the vehicles of passengers.

Furthermore, the price of the patented apparatus can be reduced dramatically because it can be manufactured at a noticeably and competitively low cost compared with the ECAS system.

### Industrial Applicability

As such, the principal object of the present invention is to provide the multiple ride height control apparatus for the air suspension system, which allows that the boarding height of buses can get lowered or the height of the frame/body can get lowered when driving at high speed and the height of the frame/body can get raised when driving in rough roads or on slopped roads in order to improve the driving stability by adjusting the mounting angle or the mounting location of the mechanical leveling valve. Besides that, in such manners, this invention also allows the users to adjust the height of the frame/body as needed when loading or unloading cargoes, or getting into and out of the vehicles of passengers for the convenience. In addition, it also enables the multiple ride height control apparatus to be simply structured and to be applied to all kinds of vehicles at low prices, irrespective of types of vehicles, for example, passenger cars, cargo trucks, shuttle buses, vehicles for the disabled, and so on.

## Claims

1. A multiple ride height control apparatus for an air suspension system having an air spring to be installed between a frame/body and a suspension arm in order to adjust the ride height, by filling and exhausting a compressed air, said apparatus comprising:
a mechanical leveling valve for controlling a filling and exhausting said compressed air by adjusting its mounting angle, being rotated clockwise and counterclockwise;
a valve driver for rotating said mechanical leveling valve to the direction of filling and exhausting said compressed air; and
a controller for controlling the operation of said valve driver.

2. According to claim 1, said mechanical leveling valve comprising:
a valve body for controlling the filling and exhausting said compressed air by the clockwise and counterclockwise rotation of a rotating handle;
a mounting bracket which is installed to fix said valve body and be rotated by said valve driver clockwise and counterclockwise; and
said rotating handle, one end of which is connected to the rotating center shaft of said valve body and other end of which is connected to the top of the linkage connected to the suspension arm for the relative rotation.

3. According to claim 2,
said valve driver includes a forward/reverse motor that rotates said mounting bracket clockwise and counterclockwise

4. According to claim 2, said valve driver comprising:
a driven gear combined with said mounting bracket;
a rack for making said driven gear rotate clockwise and counterclockwise by reciprocal movement; and
a bidirectional cylinder for making said rack move reciprocally

5. According to claim 2, said mounting bracket is comprised so as to be able to return to its original position elastically;
said driver includes a pair of unidirectional cylinder or actuator which pressurize said mounting bracket from its both sides to the forward and reverse directions.

6. According to claim 2, wherein said controller includes a normal mode and a user selection part, said user selection part to select either an ascending mode to raise the ride height or a descending mode to lower it; and
said valve driver rotates said mounting bracket to the direction of filling and exhausting said compressed air according to the mode selected by said controller
